# EUROPEAN PATENT APPLICATION

(11) **EP 2 849 416 A1**
(43) Date of publication of application: **18.03.2015**
(21) Application number: 13380038.3
(22) Date of filing: 17.09.2013
(51) Int. Cl.: H04M 1/60

(54) **Cover and case or housing for mobile terminals and smartphones with an audio medium**

(71) Applicant: Moran Leiva, Ana, 19001 Guadalajara (ES)
(72) Inventor: The designation of the inventor has not yet been filed

(57) **Abstract**

The invention consists of a PHONE COVER AND HOUSING equipped with audio, with technical characteristics detailed in attached documentation, and an electronic mechanism linked to the terminal. The invention is intended for use in mobile terminals and Smartphones, which may have different characteristics.

The present invention relates to a cover and casing or housing with an audio medium for mobile terminals and Smartphones. The invention may be used for multiple conference calls and severals connections, as well as listening to music, radio and / or television.

The covers are aimed to be use with mobile terminals and Smartphones. They are equipped with an audio medium with an electronic mechanisums linked to the terminal.

The models have two options in the speaker position (external or internal).

As option 1.- the circuit may have a microphone that is polarized from the mobile phone itself.

As option 2.- the circuit may have a charge indicator LED. LED turned on indicates charging on progress. Once the battery is fully charged the led will turn off.

## Description

The invention consists of a PHONE COVER AND HOUSING equipped with audio, with technical characteristics detailed in attached documentation, and an electronic mechanism linked to the terminal. The invention is intended for use in mobile terminals and Smartphones, which may have different characteristics.

Annex I, II and III present the technical description according to the article 25.1.LP to enable one skilled in the art to execute the invention The annex II is a part of a likely model.

The material is presented as follows:
a) Abstract
b) Memory invention-Description:
   - Description of the Invention.
   - Title of the invention.
   - Technical Field.
   - State of the prior art.
   - Product Description.
   - Modes of realizations.
c) Claims.
d) Drawings
   Annex I
   Annex II
   Annex III

### Title of Invention.

The title is "COVER AND CASE or HOUSING FOR MOBILE TERMINALS and Smartphones WITH AN AUDIO MEDIUM."

### Technical Field.

The present invention relates to a cover and casing or housing with an audio medium for mobile terminals and Smartphones. The invention may be used for multiple conference calls and severals connections, as well as listening to music, radio and / or television.

### State of the prior art.

To date the technique was divided in audio systems and cases.
- Cases existed with mere embellishment and protective capacity.
- On the one hand audio systems integrated in mobile terminals and smartphones were internal and not very useful. On the other hand external audio systems are very bulky and therefore useless for certain needs.

### Product Description.

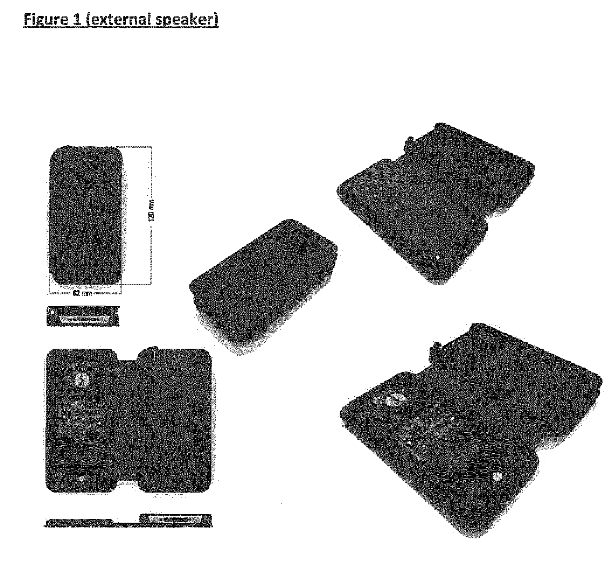

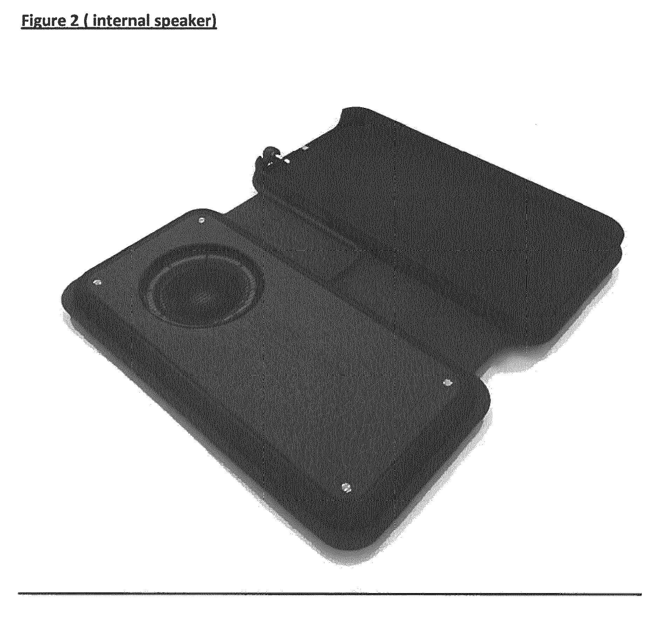

The two drawings shown in Figure 1 (external speaker) and Figure 2 (internal speaker) in the document Drawings show example models of different cover's possibilities. The covers are aimed to be use with mobile terminals and Smartphones. They are equipped with an audio medium with an electronic mechanisums linked to the terminal.

The models shown differ in the speaker position (external or internal) whose characteristics are described in the accompanying documentation.

### Description electronic circuit audio amplifier and rechargeable jack

### connection

The circuit consists of two main blocks, one battery charger, based on the integrated circuit. The battery charger allows the charge from feeders and USB connectors.

On the board, space is provided for configuring the charger.

This prototype uses a NOKIA BL-5CB battery of 3.7 V. However it can be replaced by any similar battery.

The load power is done through micro USB connector.

The other block is the audio amplifier based on the integrated circuit. Its low power consumption allows the speaker to deliver certain power to the system's speaker while keeping a very low battery consumption.

The circuit has an on and off switch.

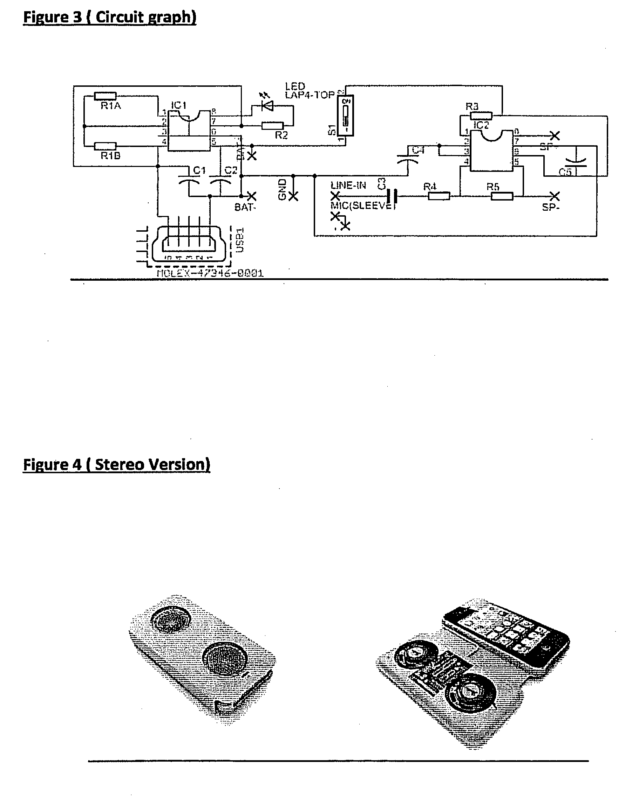

The attached circuit chart (figure 3 in drawings) shows the equation acting on the gain thereof.

As option 1.- the circuit may have a microphone that is polarized from the mobile phone itself. (Figure 4 Stereo Version in drawings).

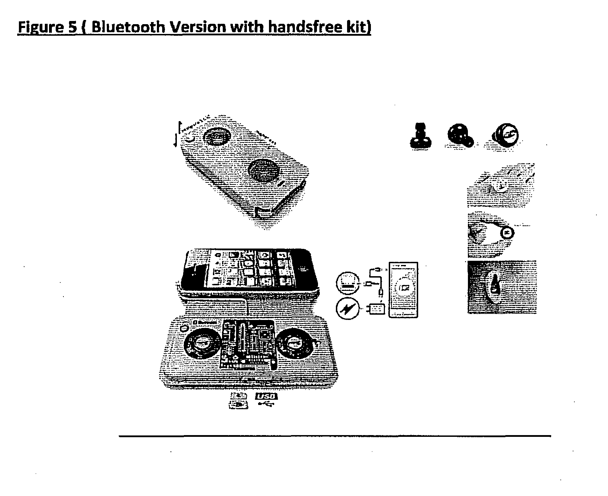

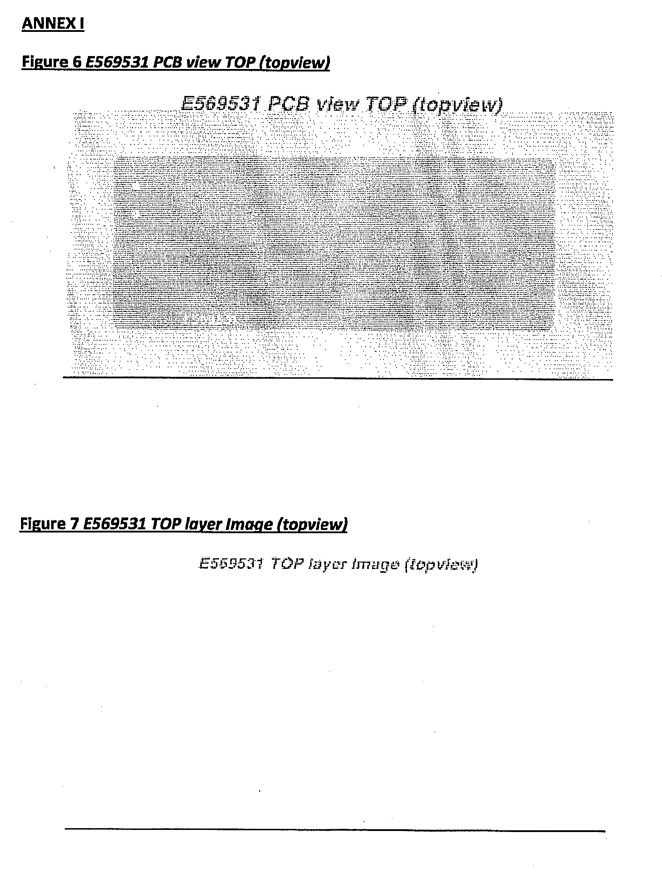

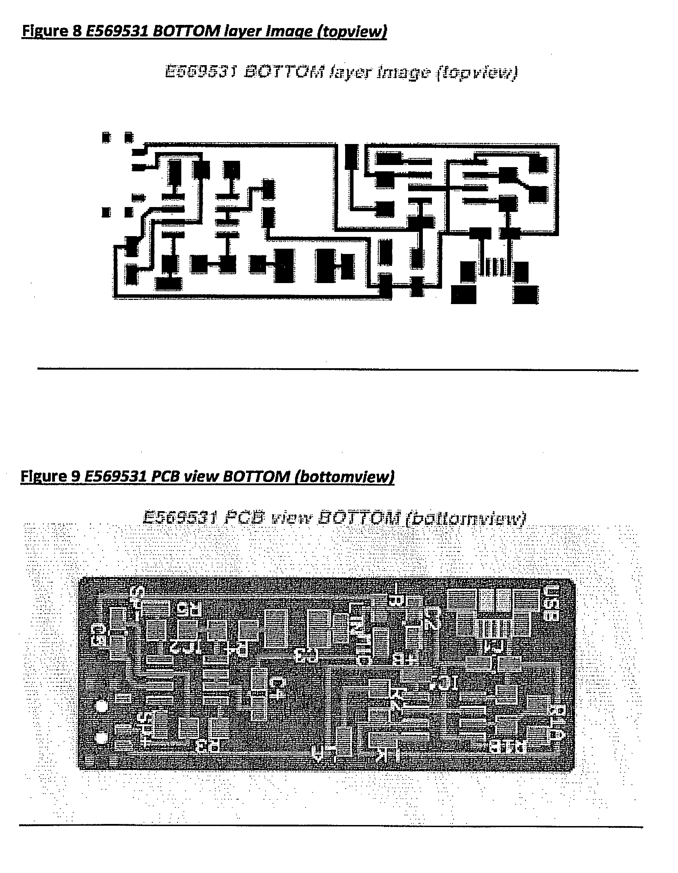

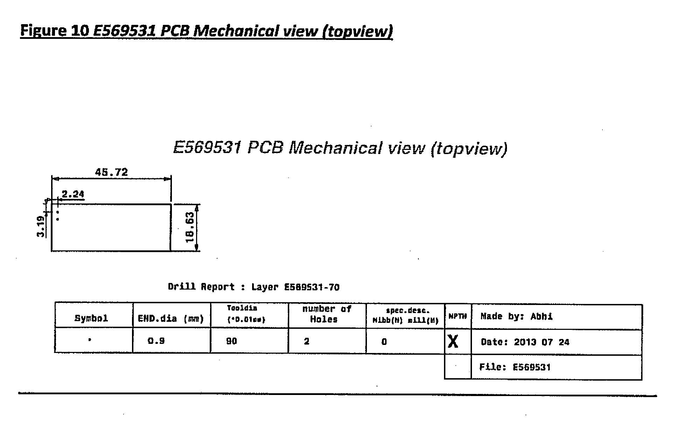

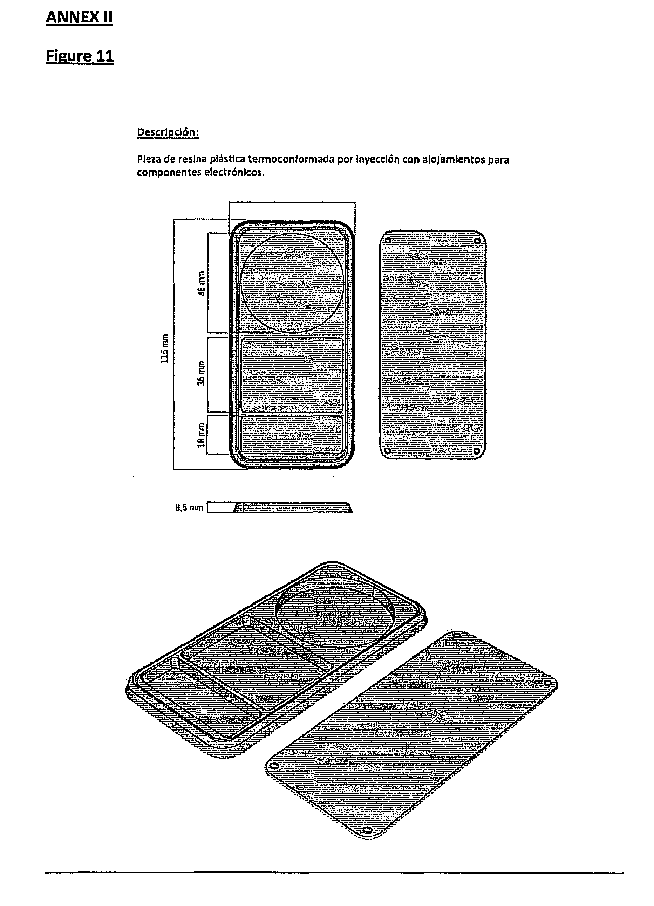

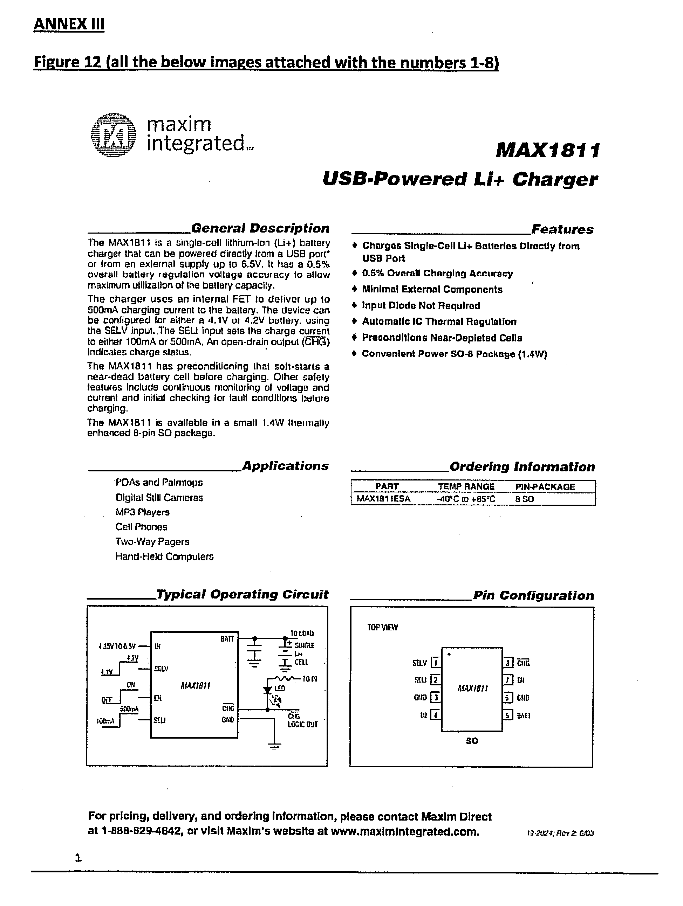

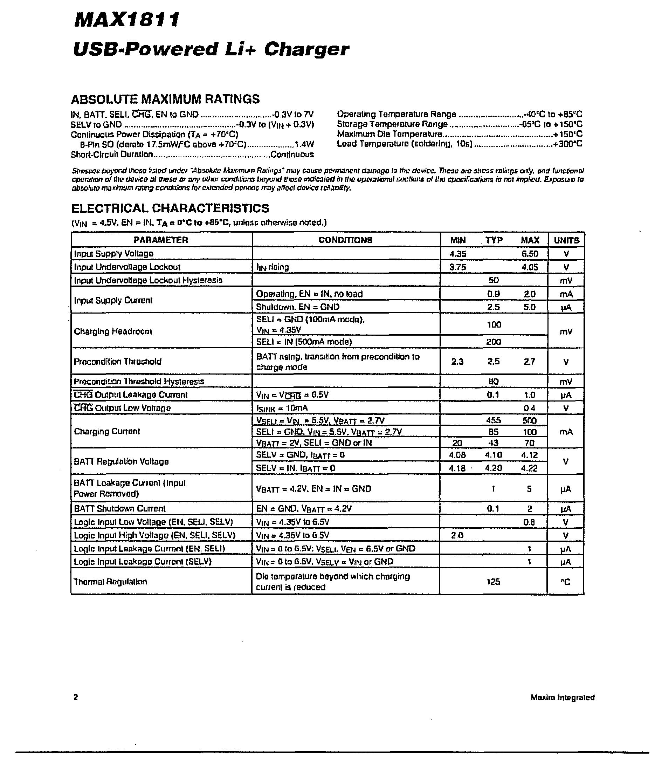

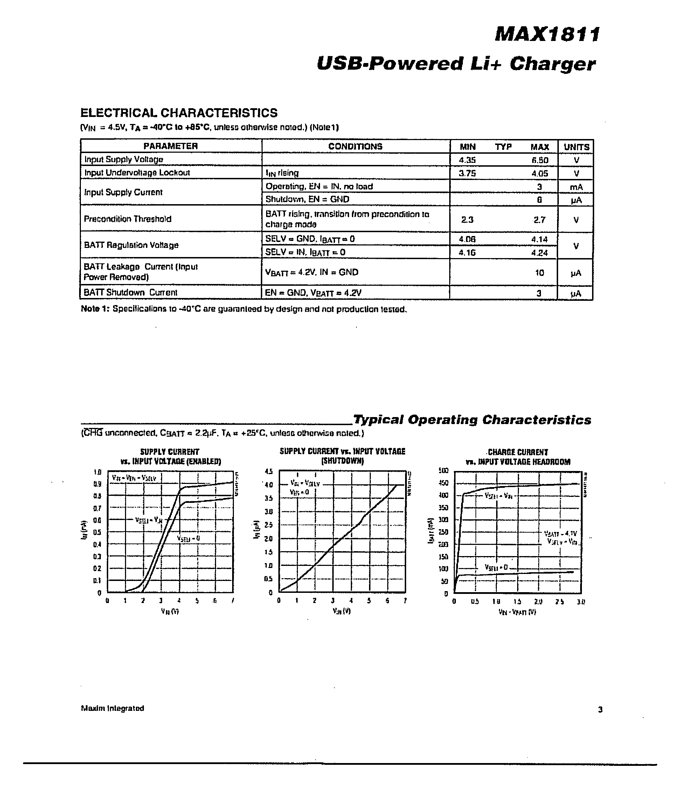

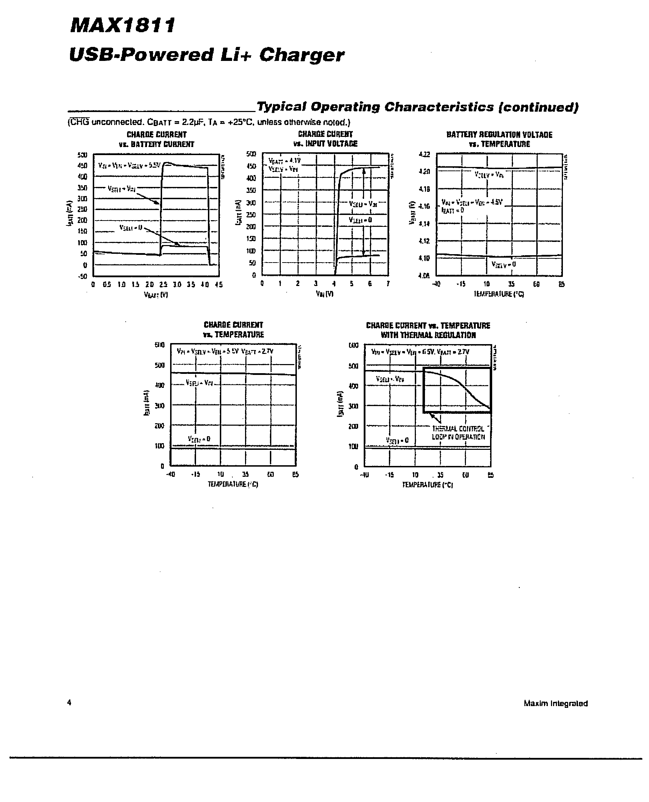

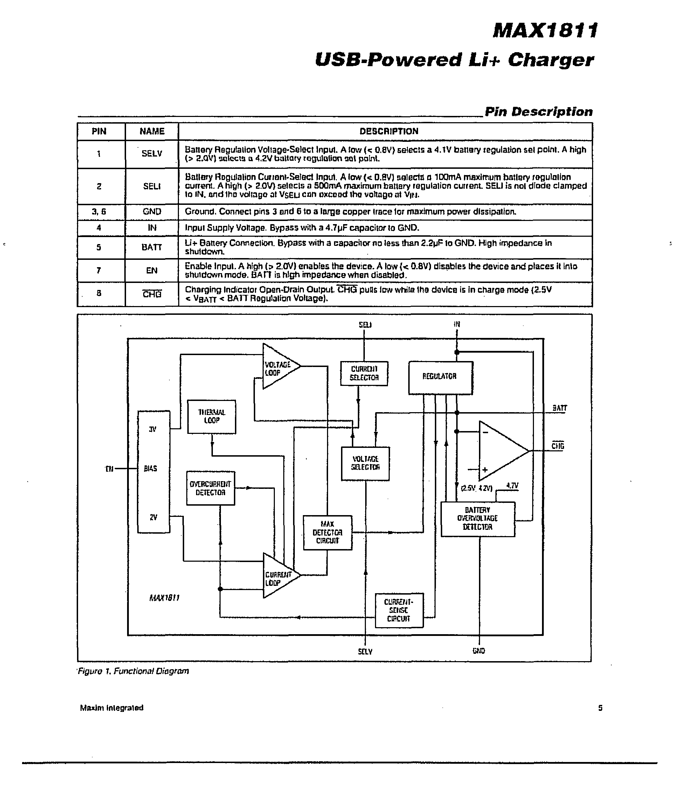

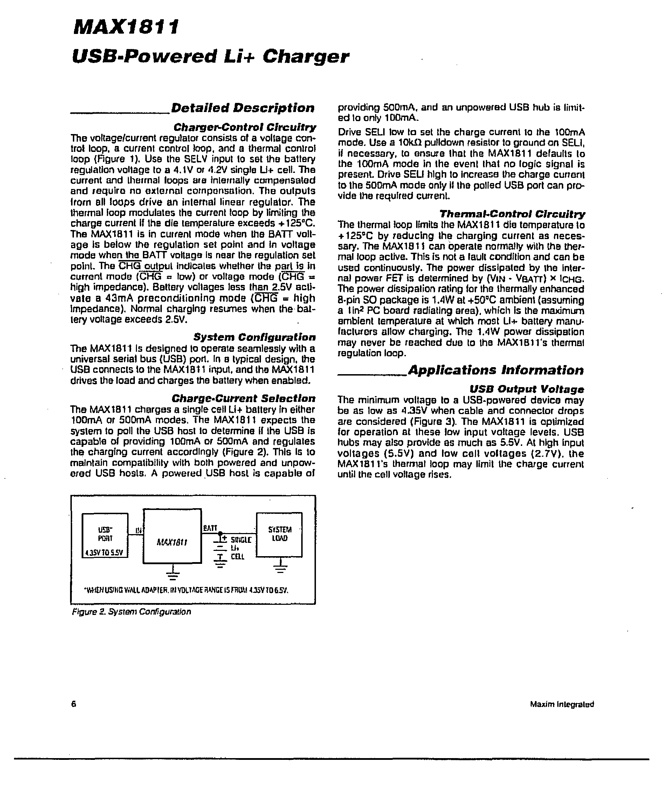

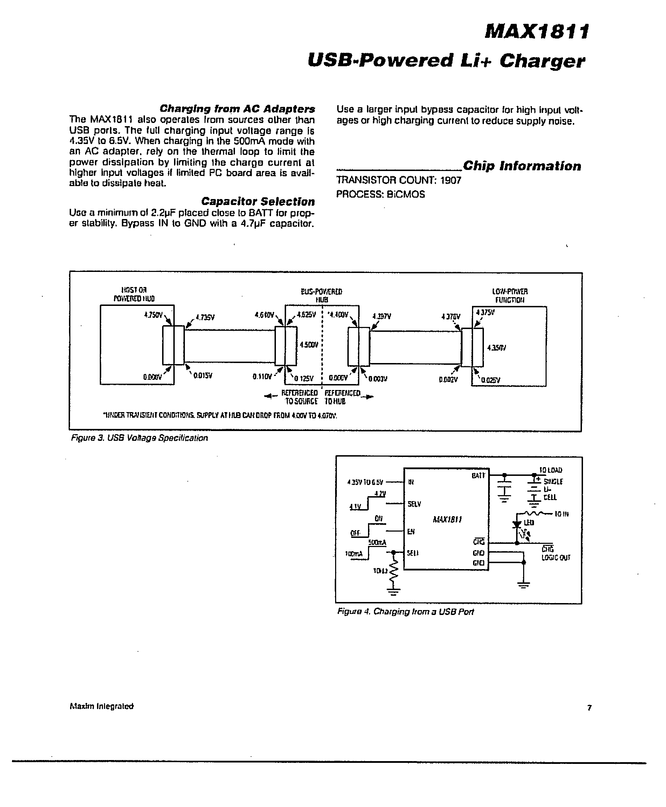

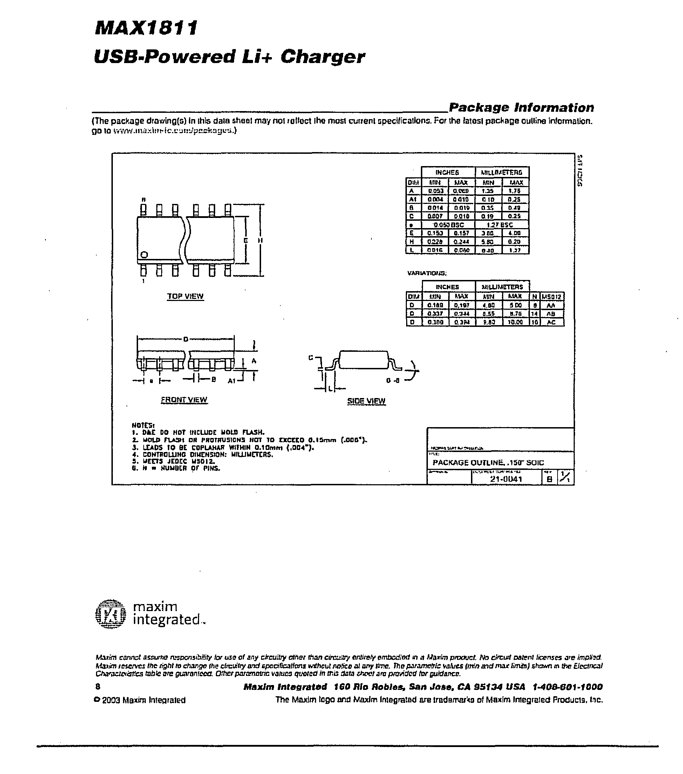

As option 2.- the circuit may have a charge indicator LED. LED turned on indicates charging on progress. Once the battery is fully charged the led will turn off. (Figure 5 Bluetooth Version with handsfree kit in drawings).

The audio connection with your phone will be made by TRRS connector. It complies with international standard CTIA / AHJ (Apple, Samsung, LG, HTC, latest Nokia, Sony and all latest Android).

### Modes of realizations.

Covers will be manufactured in different skin textures and colors.

Covers could be manufactured with rigid plastic structures or any other materials which may replace plastic for ecological and environmental reasons.

In the case of casings or housing, a structure will be produced in similarly rigid plastic or any other material may replace plastic for ecological and environmental reasons.

The battery, the mainboard and the speakers will be added to the cover and/or housing in accordance to showed in the previous pages.

In the case of a version with microphone, a microphone will be added as well.

Finally for bluetooh version will incorporate a handsfree kit.

And in the case of carrying a charge indicator LED, such a LED will be incoporated.

## Claims

1. With the execution of this invention is claimed the invention of a cover and / or housing intended for use in mobile terminals and Smartphones. The cover and/or housing "is characterized by" including an audio medium, with output to a mono or stereo speaker, and an electronic mechanism linked to the terminal.
